# EUROPÄISCHE PATENTSCHRIFT

(11) **EP 0 485 546 B1**
(45) Veröffentlichungstag und Bekanntmachung des Hinweises auf die Patenterteilung: **15.02.1995**
(21) Anmeldenummer: 91908607.4
(22) Anmeldetag: 29.04.1991
(51) Int. Cl.: B23C 5/20

(54) **SCHNEIDEINSATZ FÜR WERKZEUGE**
CUTTING INSERT FOR TOOLS
GARNITURE DE COUPE POUR OUTILS

(30) Priorität: 28.04.1990 DE 4013717
(43) Veröffentlichungstag der Anmeldung: 20.05.1992
(73) Patentinhaber: SANDVIK AKTIEBOLAG, 811 81 Sandviken (SE)
(72) Erfinder: STOFFELS, Karl-Heinz, D-4005 Meerbusch 1 (DE)
(74) Vertreter: Schumacher, Horst, Dr. Dipl.-Phys.
(86) Internationale Anmeldenummer: EP9100825
(87) Internationale Veröffentlichungsnummer: WO9117014

(56) Entgegenhaltungen:
- EP-A- 0 035 848
- EP-A- 0 334 129
- EP-A- 0 370 494
- US-A- 3 541 655

## Beschreibung

Die Erfindung betrifft einen Schneideinsatz mit den Merkmalen des Oberbegriffs von Patentanspruch 1 sowie ein Werkzeug mit den Merkmalen des Oberbegriffs von Patentanspruch 4.

Schneideinsätze finden u. a. an Werkzeugen zur spanabhebenden Bearbeitung von zu schlichtenden Werkstückflächen wie z. B. an einem Fräskopf Anwendung, der um eine Achse rotierbar ist, und mehrere, an seiner Stirnfläche im Bereich seines äußeren Umfangs wirksame, austauschbare, Hauptschneiden aufweisende Schneidplatten sowie eine Schlichteinrichtung umfaßt, wobei die von der Stirnfläche des Fräskopfes fortweisende Seitenfläche (axiale Außenfläche) jeder Schneidplatte um einen Freiwinkel bezüglich des Fräskopfes geneigt ist. Derartige Fräsköpfe werden für die Bearbeitung insbesondere von Maschinenteilen, wie von Motoren, verwendet. Die Rotationsachse des Fräskopfes ist im wesentlichen rechtwinklig zu der bearbeiteten Werkstückoberfläche orientiert. Geringfügige Abweichungen von einer 90°-Orientierung können sich durch einen gezielt vorgesehenen Spindelsturz, Neigungsfehler der Spindel sowie die Reaktionskraft zwischen Fräskopf und Werkstück ergeben. Aufgrund dessen sowie aufgrund von Maß- und Einbautoleranzen der Schneidplatten und der Schneidplattensitze am Fräskopf weist das lediglich mit den Schneidplatten bearbeitete Werkstück eine für viele Anwendungsfälle noch zu rauhe Oberfläche auf. Deshalb sind diese Fräsköpfe mit einer Schlichteinrichtung versehen. Diese besteht bei den bekannten Fräsköpfen aus in der Regel einer einzigen sogenannten Breitschlichtplatte je Fräskopf, die z. B. in der Position einer der Schneidplatten des Fräskopfes anstelle dieser Schneidplatte eingesetzt wird. Ihre sich im wesentlichen radial erstreckende Schneidkante muß sehr genau parallel zu der bearbeiteten Werkstückoberfläche orientiert sein. Unregelmäßigkeiten in der Schneidkante, unpräziser Einbau der Breitschlichtplatte sowie wechselnde Belastungen des Fräskopfes, wie sie z. B. am Anfang und am Ende einer zu fräsenden Werkstückfläche auftreten können, schlagen sich unmittelbar als Verschlechterung der Oberflächengüte des bearbeiteten Werkstücks nieder.

Die Anforderungen an die Oberflächengüte spanabhebend bearbeiteter Maschinenteile u. dgl. sind zudem gewachsen. Z. B. müssen Dichtflächen bessere Oberflächen aufweisen, wenn weniger elastische und/oder asbestfreie Dichtungen verwendet werden. Ein weiteres Problem stellen zunehmend realisierte Gewichtseinsparungen dar, welche zu vergleichsweise dünnwandigen Werkstücken führen. Dünnwandige Werkstücke neigen verstärkt dazu, dem Schneiddruck beim Fräsen nachzugeben, was zu einer gewissen Welligkeit der bearbeiteten Werkstückoberfläche führen kann.

Aus der EP-A2-0 334 129 sind Schneideinsätze für Werkzeuge zur spanabhebenden Bearbeitung bekannt, bei dem die Merkmale a), b) und c) des Patentanspruchs 1 der vorliegenden Patentanmeldung realisiert sind. Bei diesem bekannten Schneideinsatz bilden die wechselseitig paarweise sich an die Seitenflächen anschließenden Stirnflächen mit den Seitenflächen einen rechten Winkel. Dadurch wird auch zwischen den Fasen und den Stirnflächen benachbarter Wandungen (Verbindungsflächen) ein rechter Winkel gebildet. Die von den rechtwinklig sich schneidenden Flächen gebildeten Berührungskanten bilden eine erste und eine zweite Hauptschneide. Derartige Wendeschneidplatten sind lediglich für im Vergleich zu Schlichtvorgängen gröberen spanabhebenden Bearbeitungen von Werkstücken geeignet. Ein gleichzeitiges Schlichten des Werkstückes ist mit dieser Wendeschneidplatte nicht möglich.

Davon ausgehend liegt der Erfindung die **Aufgabe** zugrunde, einen Schneideinsatz und ein Werkzeug der eingangs genannten Art so zu gestalten, daß hohe Oberflächengüten bei vergleichsweise großen Standzeiten der Wendeschneidplatten erreicht werden. Besonders erwünscht ist auch ein möglichst weiches Schneiden des Fräskopfes, d. h. ein Schneiden mit möglichst geringem Schnittdruck.

Zur Lösung dieser Aufgabe wird ein Schneideinsatz mit den Merkmalen des Patentanspruchs 1 sowie ein Werkzeug mit den Merkmalen des Patentanspruchs 4 vorgeschlagen.

Derartige Schneidplatten sind vorteilhaft einsetzbar für Werkzeuge zur spanabhebenden Bearbeitung von zu schlichtenden Werkstücken, wie z. B. für Planfräsköpfe (Fräsköpfe), große und kleine Aufbohrwerkzeuge, Feinbohrwerkzeuge, Reibwerkzeuge.

Aus der prioritätsälteren, aber nachveröffentlichten EP-A2-0 370 494 ist ein als Wendeschneidplatte bezeichneter Schneideinsatz für ein spanend arbeitendes Werkzeug, insbesondere für einen Schlichtmesserkopf, bekannt, bei dem die Merkmale a), b), c) und e) des hier vorliegenden Patentanspruchs 1 bekannt sind. Bei diesem bekanntem Schneideinsatz wird eine Krümmung der Schlichtschneidkante dadurch erzielt, daß die Stirnflächen an ihrem schneidkantennahen Rand gewölbt ausgebildet werden. Die Herstellung derart ausgebildeter Kantenwölbungen ist mit erheblichen praktischen Schwierigkeiten verbunden. Insbesondere ist es erforderlich, jede Schlichtkante durch einen gesonderten, die Wölbung realisierenden Arbeitsschritt herzustellen.

Durch die Erfindung werden u. a. folgende Vorteile erreicht:
- Jede einzelne Schneidplatte dient gleichzeitig auch als Schlichteinrichtung, weshalb relativ große Vorschubgeschwindigkeiten des Fräskopfes realisiert werden können, ohne die Standzeit des Werkzeuges bzw. der Schneidplatten und/oder die erzielte Oberflächenqualität negativ zu beeinflussen;
- die geometrische Form der Schneidplatten bleibt vergleichsweise einfach, so daß der Herstellungsaufwand nicht allzu hoch ist;
- die Schnittkräfte können vergleichsweise gering gehalten werden;
- Kantenausbrüche im Bereich des Schneidkantenaustritts vom Werkzeug sind relativ selten bzw. geringfügig;
- eine einzige Schneidplatte weist vier Hauptschneiden sowie vier zugehörige Schlichtschneiden auf;
- Toleranzabweichungen aufgrund von Toleranzen im Bereich der Schneidplatten selbst oder der Schneidplattenaufnahmen des Fräskopfes sowie Verschleißerscheinungen bzw. Fehler der Schlichtschneiden einzelner Schneidplatten wirken sich bereits deshalb nur vergleichsweise geringfügig auf die Oberflächenqualität aus, weil die Vielzahl der Schlichtschneiden je Fräskopf zu einer Egalisierung der Fehler einzelner Schlichtschneiden führt.

Aufgrund der Schneidplattengeometrie ist der Keilwinkel an den Schlichtschneiden regelmäßig kleiner als 90°. Vorzugsweise liegt dieser Keilwinkel zwischen 60° und 85°, insbesondere bei 75°. Zur Erreichung derartiger Keilwinkel braucht keine der Schneidplattenoberflächen hohlgeschliffen oder in entsprechender Weise mit Spanformstufen versehen zu werden. D. h. alle Schneidplattenoberflächen können eben oder konvex gekrümmt sein, was die Herstellung der Schneidplatten vereinfacht. Diese Schneidplattengeometrie führt, insbesondere bei den insoweit bevorzugten Schneidplatten mit ebenen Oberflächen dazu, daß die Schneidplatten besonders exakt im Werkzeug, wie insbesondere in einem Fräskopf eingebettet werden können. Dies ist insbesondere im Hinblick auf die Wendemöglichkeit der Schneidplatten von Vorteil, da dann trotz der Wendemöglichkeit eine hohe Einbaupräzision und entsprechend gute Oberflächengüten erzielt werden, ohne daß das Austauschen oder Wenden der Schneidplatten besonders hohen Positionier- oder Justieraufwand zur Folge hat.

Der Ergänzungswinkel des Keilwinkels zu 90°, der bei einem bevorzugten Keilwinkel von 75° also 15° beträgt, wird vorzugsweise auf den sogenannten Freiwinkel und auf den sogenannten Spanwinkel der Schlichtschneiden aufgeteilt. Der Freiwinkel ist dabei derjenige Winkel, den die axial vom Fräskopf fortweisende Seitenfläche jeder Schneidplatte mit der bearbeiteten Werkstückoberfläche bildet. Die Schneidplatten sind also annähernd tangential bezüglich der bearbeiteten Werkstückoberfläche orientiert, wobei die den Freiwinkel bildende Schneidplattenneigung zur bearbeiteten Werkstückoberfläche nur wenige Grad, vorzugsweise etwa 2 bis 15 und insbesondere um etwa 8° beträgt. Der Freiwinkel sollte möglichst kleiner als der Ergänzungswinkel des Keilwinkels zu 90° sein, um auf einfache Weise einen geeigneten Spanwinkel der Schlichtschneiden zu erhalten. Dabei ist der Spanwinkel der Neigungswinkel der in Arbeitsrichtung weisenden Stirnfläche der Schneidplatte bezüglich der Normalen auf der bearbeiteten Werkstückoberfläche. Dieser Winkel beträgt vorteilhaft zwischen 2 und 15° und liegt vorzugsweise bei etwa 7°.

Auf die Fasen kann zwar grundsätzlich verzichtet werden, da auch ohne diese Fasen die der Erfindung zugrundeliegende Aufgabe grundsätzlich gelöst und die wesentlichen Vorteile der Erfindung erzielt werden. Derartige Fasen sind allerdings in der Vielzahl von Anwendungsfällen von großem Vorteil, insbesondere dann, wenn der Anstellwinkel, den die Hauptschneiden mit der bearbeiteten Werkstückoberfläche nicht allzu groß ist, sondern, wie erfindungsgemäß besonders bevorzugt, zwischen 20° und 60° liegt. Je geringer der Anstellwinkel ist, umso kürzer werden nämlich bei der erfindungsgemäßen Schneidplattengeometrie die Schlichtschneiden, d. h. die kurzen Trapezseiten und/oder umso länger werden die langen Trapezseiten und damit die Länge und Breite der Schneidplatten. Ohne die Fasen sind die Anstellwinkel stets gleich den Keilwinkeln, weil es sich dabei um Wechselwinkel handelt. Kleine Keilwinkel, z. B. solche von weniger als 60°, sind meistens aber unerwünscht, da sie u. a. besonders verschleißanfällig sind. Durch die erfindungsgemäßen Fasen können also unter Vermeidung vorerwähnter Nachteile die Anstellwinkel und die Keilwinkel frei und entsprechend den jeweiligen Anforderungen gewählt werden. Es ist zwar denkbar, die Anstellwinkel zwischen 15° und 70° frei zu wählen, doch haben sich Anstellwinkel zwischen 30 und 40° als besonders vorteilhaft erwiesen. Es wurde gefunden, daß besonders kleine Anstellwinkel zu besonders guten Werkstückqualitäten an den Austrittskanten der Schneiden führen. Je kleiner der Anstellwinkel ist, umso geringer ist bei sonst gleicher Schneidplattengeometrie die mit der Hauptschneide erzielbare Schnittiefe. Insofern hat sich ein Anstellwinkel von etwa 30° als besonders günstig erwiesen. Erfindungsgemäß ist es allerdings auch möglich, den außerhalb der erfindungsgemäßen Fasen verbleibenden Teil der Körperkante zwischen benachbarten Stirnflächen der Schneidplatte zu Schneidzwecken zu verwenden, und zwar als Sekundärschneide bzw. Notschneide für größere Schnittiefen.

Durch die konvex gekrümmten Schlichtschneiden wird erreicht, daß die Schlichtschneide nur an einem Punkt bzw. - je nach Verschleißzustand - auf einem mehr oder minder kurzen Teilstück ihrer Gesamtlänge die Solltiefe beim Schlichtvorgang erreicht. Die konvexe Krümmung der Schlichtschneide ist allerdings außerordentlich gering, so daß zwischen dem Einlaufpunkt bzw. den Auslaufpunkt und dem tiefsten Punkt der Schlichtschneide ein Höhenunterschied von in der Regel nur wenigen hundertstel Millimetern besteht. Da der Schlichtkantenverlauf in erster Näherung kreisförmig ist, führt ein Verkippen einer Schneidplatte aufgrund von Maß- und/oder Einbautoleranzen oder aufgrund eines Spindelsturzes oder aufgrund der auftretenden Schnittkräfte lediglich dazu, daß ein anderer Punkt als der ursprünglich vorgesehene Punkt entlang der Schlichtschneidenlänge der tiefste Punkt ist, wobei aber die am Werkstück wirksame Schnittiefe der Schlichtschneide immer die gleiche bleibt. Die unterschiedliche Lage des tiefsten Punktes bei verschiedenen Schneidplatten desselben Fräskopfes oder eines anderen Werkzeuges mit einer Mehrzahl von Schneideinsätzen hat aber einen nur geringfügigen Einfluß auf die letztendlich erzielte Rauhigkeit der bearbeiteten Werkstückoberfläche, weil jede der am Werkzeug, insbesondere umfangsverteilten, Schneidplatten mit einer Schlichtschneide versehen ist. Bei einem Fräskopf mit z. B. 50 Schneidplatten, deren Schlichtschneiden jeweils 7 mm lang sind, wird bei einer Fräskopfumdrehung eine Gesamtschlichtlänge von maximal 350 mm erreicht. Die Vorschubgeschwindigkeit (Relativgeschwindigkeit zwischen Fräskopf und Werkstück) kann daher in sehr großem Umfang variiert werden, ohne daß sich spürbare Veränderungen in der Oberflächengüte ergeben - vor allem dann, wenn sich diese Vorschubgeschwindigkeiten in dem gebräuchlichen Bereich von z. B. 3 bis 20 mm pro Werkzeugumdrehung bewegen. - Die Krümmung der Schlichtschneiden wird jedenfalls so gewählt, daß auch bei ungünstigster Konstellation der Einzeltoleranzen der in bezug auf die Schnittiefe tiefste Punkt der Schlichtschneiden jeweils zwischen dem Einlauf- und Auslaufpunkt der Schlichtschneide, d. h. zwischen deren Anfang und Ende liegt.

Ein allmählich einsetzender Verschleiß der Schlichtschneiden eines Fräskopfes führt zu einer etwas verminderten Schnittiefe, die durch einen entsprechenden Axialstellungs-Ausgleich des Fräskopfes ausgeglichen werden kann. Im übrigen führt ein solcher Verschleiß dazu, daß die Schlichtschneiden nicht mehr an einem einzigen Punkt, sondern entlang einer zum bearbeiteten Werkstück exakt oberflächenparallelen Kante die größte Arbeitstiefe erreichen. Ein solcher Einschleifeffekt führt zu einer noch weiter verringerten Rauhigkeit der bearbeiteten Oberfläche.

Um zu erreichen, daß beim Bearbeitungsvorgang der tiefste Punkt der Schlichtschneiden möglichst in der Mitte der Schlichtschneide zwischen ihren beiden Endpunkten liegt, wird die Schlichtschneidenkrümmung so gewählt, daß bei noch unbelastetem Werkzeug die axiale/radiale Höhendifferenz zwischen Einlaufpunkt und tiefstem Punkt der Schlichtschneide größer, insbesondere etwa doppelt so groß wie die Höhendifferenz zwischen dem Auslaufpunkt und dem tiefsten Punkt der Schlichtschneide ist. In Verbindung mit einem Spindelsturz und/oder den Reaktionskräften auf das Werkzeug beim Schneiden/Schlichten befindet sich dann der bezüglich des Werkstücks tiefste wirksame Punkt jeder Schlichtschneide etwa in deren Mitte. Dann sollten die Höhendifferenzen zwischen dem Einlaufpunkt bzw. dem Auslaufpunkt und dem tiefsten Punkt etwa gleich sein. Auf diese Weise wird eine besonders lange Standzeit der jeweiligen Schlichtschneiden und gleichbleibend guter Oberflächenqualität des bearbeiteten Werkstücks erzielt.

Grundsätzlich können die Ecken der Seitenflächen der Schneidplatten, d. h. die Ein- und Auslaufpunkte der beiden an einer Seitenfläche jeder Schneidplatte einander gegenüberliegende Schlichtschneiden ein beliebiges Viereck bilden. Auch derartige Schneidplatten lösen grundsätzlich bereits die der Erfindung zugrundeliegende Aufgabe. Vorzugsweise bilden diese vier Punkte aber jeweils Parallelogramme die insbesondere kongruent sind. Im einfachsten Fall handelt es sich dabei um Rechtecke. Bevorzugt sind es aber Rhomboide , d. h. Parallelogramme mit ungleichen Seiten. Im Falle rhomboider Flächen wird erreicht, daß auch hinter den Hauptschneiden ein ausreichender Freiwinkel realisierbar ist, ohne daß das radial innere Ende der zugehörigen Schlichtschneide dem radial äußeren Ende während des Schneidens/Schlichtens vorauseilt. Insbesondere wird es durch diese Schneidplattengeometrie möglich, daß der tiefste Punkt oder Bereich der Schlichtschneiden in Arbeitsrichtung der Schlichtschneide jeweils am weitesten vorn liegt. Im Allgemeinen weichen die Rhomboidwinkel etwa 1° bis 10°, und vorzugsweise um etwa 5° vom rechten Winkel ab.

Dadurch, daß die Seitenflächen der Schneidplatten mit einer kegelstumpfförmigen Fase versehen sind, kann dadurch in vergleichsweise einfacher Art eine geometrisch exakte und bei allen Schlichtschneiden einer Schneidplatte gleiche konvexe Krümmung der Schlichtschneiden erreicht werden - und zwar auch wenn, wie in der Regel erforderlich, die Krümmungsradien der Schlichtschneiden relativ groß sind. Auf diese Weise ist es auch mit vergleichsweise geringem Aufwand möglich, die Höhendifferenzen zwischen den Einlaufpunkten bzw. den Auslaufpunkten und den tiefsten Punkten der Schlichtschneiden unterschiedlich groß zu gestalten.

Im übrigen können alle Flächen der Schneidplatten von Hause aus in sich völlig eben sein, wobei jeweils die eine Hälfte und die andere Hälfte der Flächen zueinander parallele Kanten bilden. Auch die Winkel der vier Stirnflächen und der vier die Hauptschneiden bildenden Fasen sind bezüglich der beiden zueinander vorzugsweise parallelen Seitenflächen der Schneidplatten betragsmäßig gleich groß. Auf diese Weise wird eine außerordentlich effiziente Schneidplattengeometrie mit vergleichsweise geringen Mitteln bzw. vergleichsweise einfachen Herstellungsvorgängen realisierbar, wobei eine hohe Präzision, d. h. geringe Toleranzabweichungen realisierbar sind.

Die vorgenannten, erfindungsgemäß zu verwendenden Bauteile und geometrischen Verhältnisse unterliegen im übrigen keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnung, in der eine bevorzugte Ausführungsform eines erfindungsgemäßen Fräskopfes und einer erfindungsgemäßen Schneidplatte beispielhaft dargestellt sind. In der Zeichnung zeigen:
- Fig. 1: einen erfindungsgemäßen Fräskopf in Stirnseiten ansicht mit vier von insgesamt 50 erfindungsgemäßen Schneidplatten;
- Fig. 2: denselben Fräskopf im Axialschnitt, Schnitt entlang der Linie II-II gemäß Fig. 1;
- Fig. 3: eine erfindungsgemäße Schneidplatte wie in dem Fräskopf gemäß Fig. 1 und 2 verwendete, in stark vergrößerter Seitenansicht;
- Fig. 4: dieselbe Schneidplatte in einer Stirnansicht (Ansicht B gemäß Fig. 3) i.V.m. einem im Achsialschnitt dargestellten zu bearbeitenden Werkstück;
- Fig. 5: von derselben Schneidplatte eine weitere Ansicht (Ansicht D gemäß Fig. 1 und 3) i.V.m. der Einbaugeometrie bezüglich einer Fräskopfachse nach Fig. 1 und 2 und einem im Achsialschnitt dargestellten zu bearbeitenden Werkstück;
- Fig. 6: von derselben Schneidplatte eine perspektivische Darstellung;
- Fig. 7: eine zu dem Fräskopf gemäß Fig. 1 alternative Ausführungsform, ausschnittsweise;
- Fig. 8: einen Aufbohrkopf in Stirnseitenansicht (Ansicht G gemäß Fig. 9) sowie
- Fig. 9: von demselben Aufbohrwerkzeug eine Achsial-Schnittansicht (Schnitt entlang der Linie IX-IX gemäß Fig. 8).

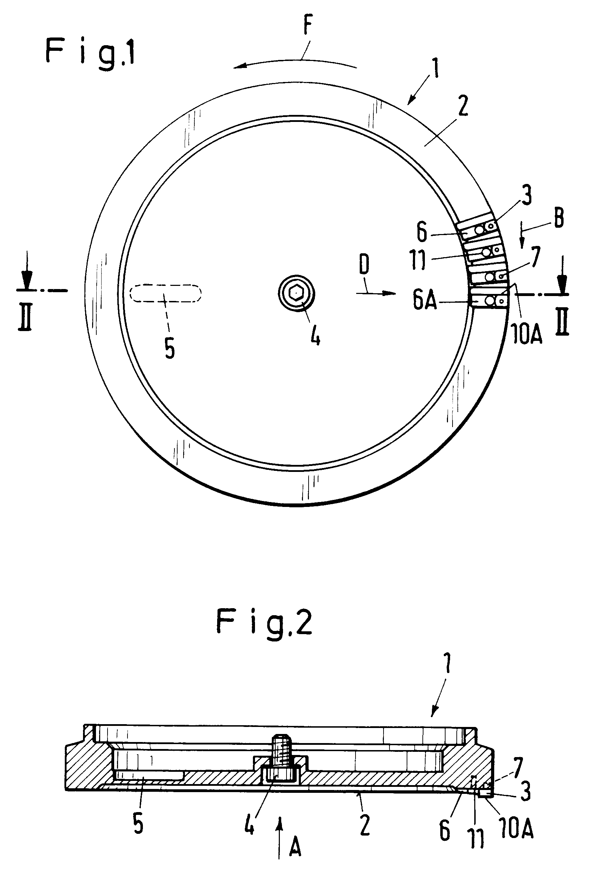

In Fig. 1 sind von insgesamt 50 in gleicher Teilung an der Stirnfläche 2 eines Fräskopfes 1 im Peripheriebereich befestigten identischen Schneidplatten 3 aus Hartmetall lediglich vier Stück dargestellt. Der Fräskopf 1 ist mittels eines zentrischen Schraubbolzens 4 am Stirnende der Rotationsachse einer nicht dargestellten Fräsmaschine befestigbar. Die Übertragung des Drehmomentes erfolgt über eine Ausnehmung 5 zur Aufnahme eines nicht dargestellten Mitnahmekeils. Die Schneidplatten 3 sind in formangepaßte Aussparungen 6 mit parallelen Kanten in die Stirnfläche 2 des Fräskopfes 1 einsetzbar und mittels eines Schraubbolzens 7 befestigbar. Zur versenkten Aufnahme des Schraubbolzens 7 weist jede Schneidplatte 3 ein entsprechendes zentrisches Loch 8 in seinen einander gegenüberliegenden Seitenflächen 9 auf. Die in Drehrichtung F des Fräskopfes 1 vorauseilende Kante jeder Schneidplatte (Schlichtschneide 10A) befindet sich im eingebauten Zustand auf einem Radius des Fräskopfes 1. Dementsprechend sind die Aussparungen 6 zur Schneidplattenaufnahme im Fräskopf 1 orientiert. Diese Geometrie ist mit einfachen Mitteln und hoher Präzision realisierbar. Die Abstützung der Schneidplatten 3 erfolgt in tangentialer Richtung an der in Rotationsrichtung F gesehen hinteren Aussparungskante 6A jeder Aussparung 6. In radialer Richtung erfolgt diese Abstützung mittels ebenfalls an die Schneidplattengeometrie formangepaßter Schraubbolzen 11.

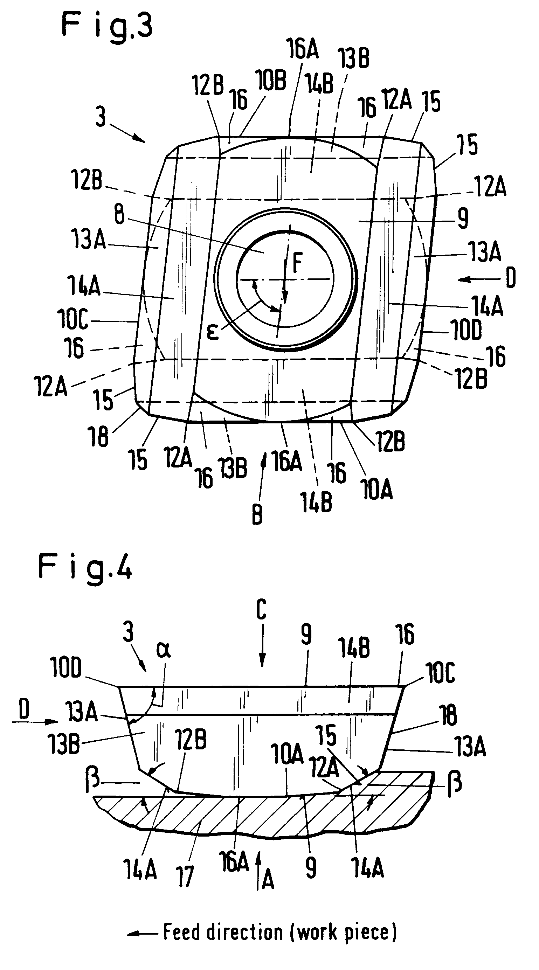

Wie aus Fig. 3 bis 6 ersichtlich, weist jede Schneidplatte 3 eine rhombische (rautenförmige) Grundform auf, wobei die von den Ecken (Einlaufpunkten 12A und Auslaufpunkten 12B) begrenzten Seitenflächen 9 Rhomboide darstellen.

Die vier Stirnflächen 13A und 13B sind jeweils kongruent und weisen eine aus zwei Trapezen zusammengesetzte Grundform auf, wobei die Stirnflächen 13A bzw. 13B paarweise wechselseitig zu den Seitenflächen 9 geneigt angeordnet sind. Im dargestellten und insoweit bevorzugten Beispiel beträgt dieser Neigungswinkel (Keilwinkel alpha) 75°.

Die von den Stirnflächen 13A bzw. 13B einerseits und den Seitenflächen 9 andererseits gemeinsam gebildeten langen Kanten jeder Schneidplatte sind je mit unter 30° in bezug auf die Seitenflächen 9 geneigten parallelen Fasen 14A bzw. 14B versehen, wobei die von benachbarten Stirnflächen 13A und 13B im Bereich der Fasen 14A bzw. 14B gebildeten Körperkanten die vier Hauptschneiden 15 jeder Schneidplatte 3 bilden.

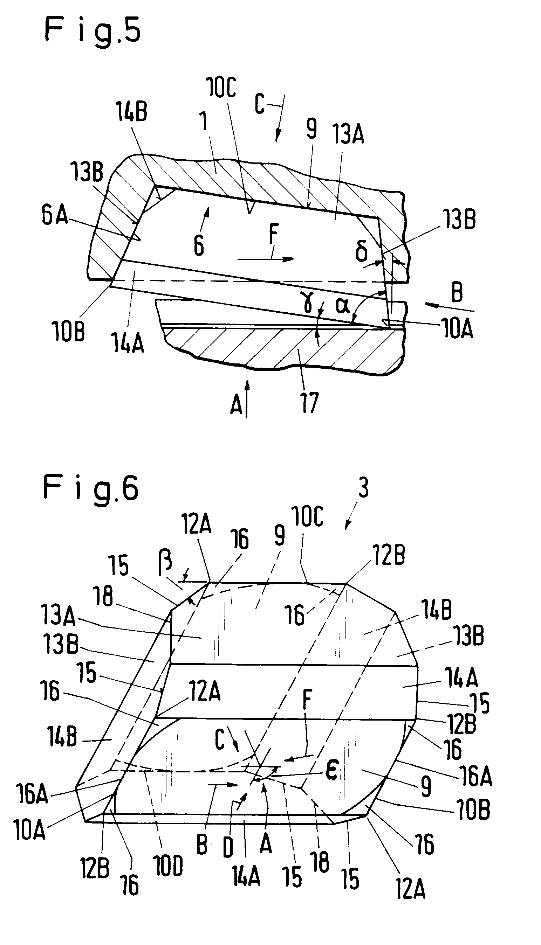

Die von den Stirnflächen 13A bzw. 13B und den Seitenflächen 9 der Schneidplatten 3 gemeinsam gebildeten kurzen Kanten bilden die Schlichtschneiden 10A bis 10D, welche mit vergleichsweise großem Krümmungsradius von z. B. 400 mm konvex gekrümmt sind. In Figuren 4 und 5 ist diese Krümmung übertrieben stark dargestellt, um den Effekt zu verdeutlichen. Diese Krümmung wird dadurch erzielt, daß die beiden Seitenflächen 9 mit konzentrisch zum Loch 8 angeordneten kegelstumpfförmigen Fasen 16 versehen sind. Der Spitzenwinkel des entsprechenden Kegelstumpfes ist vergleichsweise groß und beträgt z. B. zwischen 175 und 179°. Bei dem dargestellten und insoweit bevorzugten Ausführungsbeispiel beträgt er 178°, so daß die Neigung der Fasen 16 bezüglich der Seitenflächen 9 jeweils nur 1° beträgt. Die innere Begrenzungslinie der Fasen 16 tangiert die Schlichtschneiden 10A bis 10D jeweils in einem Berührungspunkt 16A, der näher an der Ecke (Auslaufpunkt) 12B als an der Ecke (Einlaufpunkt) 12A jeder Schlichtschneide liegt.

Die Seitenflächen 9 bilden in ihrer Grundform jeweils einen Rhomboid mit einem Rhomboidwinkel etwa von 85°.

Aus Fig. 4 ist ersichtlich, in welcher Weise eine Hauptschneide 15 im Zusammenwirken mit der sich an sie an der Ecke (Einlaufpunkt) 12A anschließenden Schlichtschneide 10A ein Werkstück 17 spanend bearbeiten. Erkennbar beträgt der Anstellwinkel Beta zwischen Hauptschneide 15 und bearbeiteter Werkstückoberfläche etwa 30°.

Aus Fig. 5 ergibt sich eine radiale Ansicht einer Schneidplatte (von innen nach außen betrachtet). Der Freiwinkel Gamma in bezug auf die bearbeitete Oberfläche des Werkstücks 17 beträgt 8°. Der sich bezüglich der Achsrichtung A des Fräskopfes 1 zur Schneidplatte 3 ergebende Spanwinkel Delta beträgt 7°.

Die in Verlängerung der Hauptschneiden 15 ausgebildeten Berührungskanten benachbarter Stirnflächen 13A und 13B der Schneidplatte 3 können als Sekundärschneiden 18 ausgebildet sein.

Es versteht sich, daß jede Schneidplatte 3 möglichst vollflächig an den Wandungen der Aussparungen 6, 6A des Fräskopfes 1 anliegen. Dies ist in Fig. 5 schematisch angedeutet.

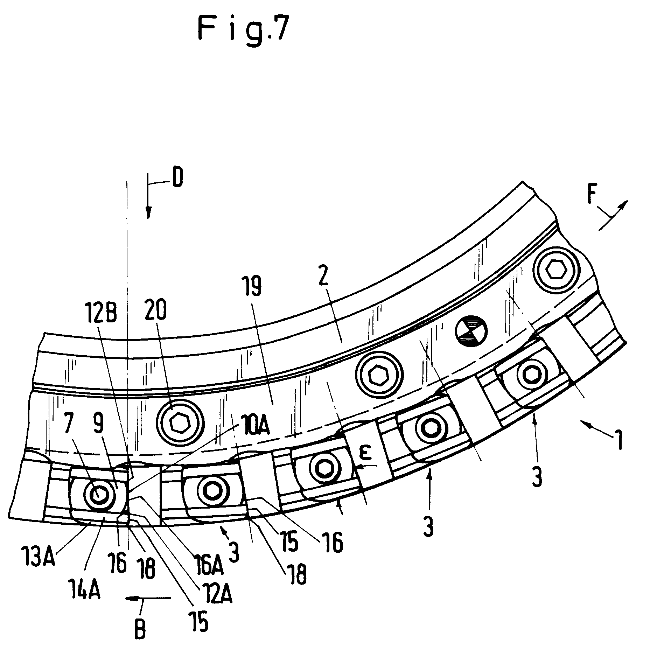

Gemäß Fig. 7 kann die Abstützung der Schneidplatten 3 nach radial innen gegenüber dem Fräskopf 1 anstatt durch einzelne Schraubbolzen (wie in Fig. 1 dargestellt) durch einen Befestigungsring 19 oder entsprechende größere Ringsegmente vorgenommen werden, die durch Befestigungsschrauben 20 am Fräskopf 1 festschraubbar sind. Hierdurch können die radialen Anlagenflächen der Schneidplatten 3 besonders maßgenau ausgestaltet werden, so daß es auf die Maßhaltigkeit der Schraubbolzen weniger ankommt, als beim Ausführungsbeispiel gemäß Fig. 1.

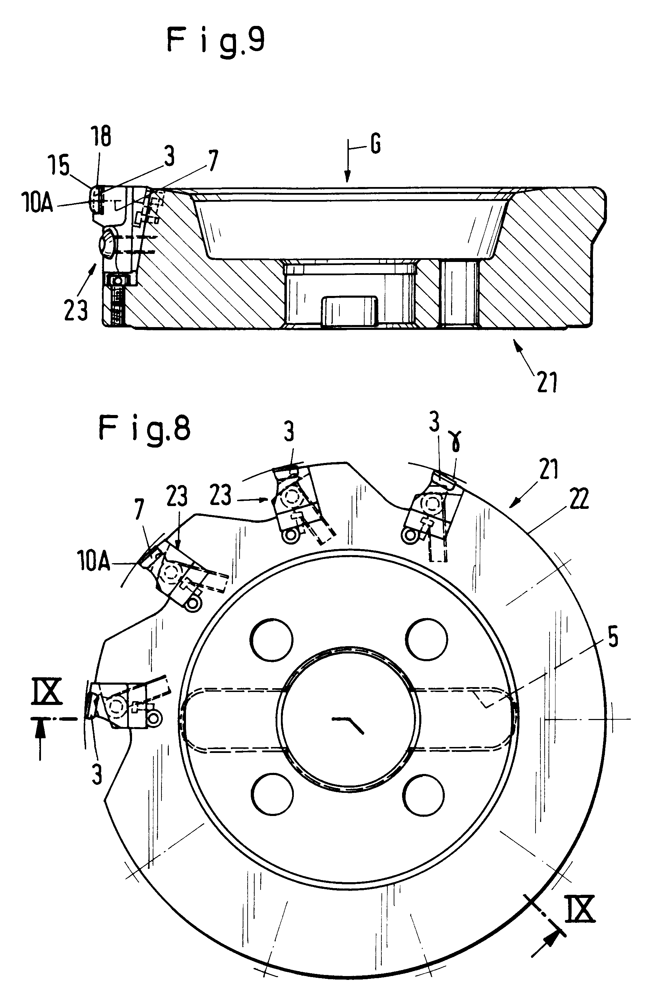

Bei dem in den Fig. 8 und 9 dargestellten Werkzeug, nämlich einem Aufbohrkopf, mit dem das Aufbohren und Schlichten einer Zylinderwand in einem einzigen Arbeitsgang erfolgt, sind in zehn am Umfang des Aufbohrkopfes 21 gleichmäßig verteilten Positionen die gleichen Schneideinsätze 3, wie in den Fig. 3 bis 6 dargestellt, vorgesehen. Der Einfachheit halber sind nur vier dieser zehn Positionen detailliert dargestellt. Im Gegensatz zu dem Ausführungsbeispiel nach Fig. 1, 2 und 7 sind die Schneidplatten 3 nicht in die Stirnfläche, sondern in die Mantelfläche 22 eingesetzt, und zwar derart, daß die Schlichtschneiden 10A in radialer und nicht in axialer Richtung wirksam werden.

Zur Fixierung jeder Schneidplatte 3 wird wiederum ein Schraubbolzen 7 (nur strichpunktiert angedeutet) verwendet. Der exakte Sitz und die Abstützung jeder Schneidplatte 3 in tangentialer und radialer Richtung (beides einstellbar), wird durch geeignete Schneidplattenaufnahmen 23 bewerkstelligt wie sie vom grundsätzlichen Aufbau her bereits aus der DE 30 36 527 A1 an sich bekannt sind. Im übrigen sind gleiche bzw. gleichwirkende Bauteile, Winkel u. dgl. mit denselben Bezugsziffern wie in den vorangehenden Beispielen bezeichnet.

### Bezugszeichenliste:

- 1: Werkzeug
- 2: Stirnfläche
- 3: Schneidplatte
- 4: Schraubbolzen
- 5: Ausnehmung
- 6: Aussparung
- 6A: Aussparungskante
- 7: Schraubbolzen
- 8: Loch
- 9: Seitenfläche
- 10A bis 10D: Schlichtschneiden
- 11: Schraubbolzen
- 12A: Ecke (Einlaufpunkt)
- 12B: Ecke (Auslaufpunkt)
- 13A: Stirnfläche
- 13B: Stirnfläche
- 14A: Fase
- 14B: Fase
- 15: Hauptschneide
- 16: Fase
- 16A: Berührungspunkt
- 17: Werkstück
- 18: Sekundärschneide
- 19: Befestigungsring
- 20: Befestigungsschrauben
- 21: Aufbohrkopf
- 22: Mantelfläche
- 23: Schneidplattenaufnahme
- A: Ansicht/Achsrichtung
- B: Ansicht
- C: Ansicht
- D: Ansicht
- F: Rotationsrichtung
- G: Ansicht
- α: Keilwinkel
- β: Anstellwinkel
- γ: Freiwinkel
- δ: Spanwinkel
- ε: Rhomboidwinkel

## Patentansprüche

1. Schneidplatte für Werkzeuge zur spanabhebenden Bearbeitung von zu schlichtenden Werkstückflächen,
a) mit zwei länglichen, einander parallel gegenüberliegenden, versetzt zueinander angeordneten Seitenflächen (9) mit je vier Ecken (12A, 12B),
b) mit vier die Seitenflächen (9) verbindenden mehrteiligen Verbindungsflächen, bestehend aus je einer an eine der jeweils längeren Kanten der Seitenflächen (9) sich anschließenden Fase (14A, 14B) und je einer an eine der jeweils kürzeren Kanten der Seitenflächen (9) einerseits und an die zu derselben Verbindungsfläche gehörenden Fase (14A, 14B) andererseits sich anschließenden Stirnfläche (13A, 13B),
c) bei dem die Verbindungsflächen paarweise wechselseitig zu den Seitenflächen (9) geneigt angeordnet sind,
d) bei dem von jeweils einer Fase (14A, 14B) einer Verbindungsfläche mit der Stirnfläche (13B, 13A) einer benachbarten Verbindungsfläche gebildete Körperkanten Hauptschneiden (15) bilden,
e) bei dem die von den Stirn- und Seitenflächen (13A und 9 bzw. 13B und 9) der Schneidplatten (3) gemeinsam gebildeten kurzen Kanten konvex gekrümmt sind und Schlichtschneiden (10A bis 10D) bilden und
f) bei dem kegelstumpfförmig ausgebildete Fasen (16) an den Seitenflächen (9) der Schneidplatten (3) zur Bildung der konvexen Krümmungen der Schlichtschneiden (10A bis 10D) vorgesehen sind.

2. Schneidplatte nach Anspruch 1, dadurch gekennzeichnet, daß die Ecken (12A, 12B) der Seitenflächen (9) der Schneidplatten (3) ein Parallelogramm bilden.

3. Schneidplatte nach Anspruch 2, dadurch gekennzeichnet, daß die Parallelogramme Rhomboide sind.

4. Werkzeug zur spanabhebenden Bearbeitung von zu schlichtenden Werkstückflächen, das um eine Achse (Achsrichtung A) rotierbar ist, mit mehreren, an seiner Stirnfläche (2) im Bereich seines äußeren Umfangs wirksamen, austauschbaren, Hauptschneiden (15) aufweisenden Schneidplatten (3) sowie mit einer Schlichteinrichtung, wobei die von der Stirnfläche (2) oder von der Mantelfläche (22) des Werkzeuges (1, 21) fortweisenden Seitenfläche (9) jeder Schneidplatte (3) um einen Freiwinkel (γ ) bezüglich der zu bearbeitenden Werkstückfläche des Werkstückes (17) geneigt ist, dadurch gekennzeichnet, daß die Schneidplatten nach einem der Ansprüche 1 bis 3 ausgestaltet sind.

## Claims

1. A cutting tool tip for tools for chip-removing machining of workpiece surfaces to be finished,
a) with two staggered oblong side surfaces (9) parallel to and opposite each other and each having four corners (12A, 12B),
b) with four multiple-part connecting surfaces connecting the side surfaces (9) and each comprising a chamfer (14A, 14 B), adjacent to one of the respective longer edges of the side surfaces (9), and each comprising an end surface (13A, 13B) adjacent to one of the respective shorter edges of the side surfaces (9) on the one hand and to the chamfer (14A, 14B) associated with the same connecting surface on the other,
c) where the connecting surfaces are arranged in pairs alternately inclined with respect to the side surfaces (9),
d) where edges formed respectively by a chamfer (14A, 14B) of a connecting surface with the end surface (13B, 13A) of an adjacent connecting surface form primary cutting edges (15),
e) where the short edges formed jointly by the end and side surfaces (13A and 9 and/or 13B and 9) of the cutting tool (3) are curved in a convex manner and form the finishing cutting edges (10A to 10D) and
f) where frustoconical chamfers (16) are provided on the side surfaces (9) of the cutting tool tips(3) for forming the convex curves of the finishing cutting edges(10A to 10D).

2. A cutting tool tip according to Claim 1, **characterised in that** the corners (12A, 12B) of the side surfaces (9) of the cutting tool tips (3) form a parallelogram.

3. A cutting tool tip according to Claim 2, **characterised in that** the parallelograms are rhomboids.

4. A tool for chip-removing machining of workpiece surfaces to be finished, which is rotatable about an axis (axial direction A) and has a plurality of operative and interchangeable cutting tool tips (3) having primary cutting edges (15) on its end surface (2) in the region of its outer periphery, and also with a finishing device, wherein the side surface (9) of each cutting tool tip (3) points away from the end surface (2) or from the outer surface (22) of the tool (1, 21) and is set at an angle of clearance (γ) relative to the surface of the workpiece (17) to be machined, **characterised in that** the cutting tool tips are formed according to one of Claims 1 to 3.

## Revendications

1. Plaque de coupe pour outils en vue de l'usinage par enlèvement de copeaux de surfaces de pièces à finir par lissage,
a) avec deux surfaces latérales allongées (9), parallèlement opposées l'une à l'autre et disposées en décalé l'une par rapport à l'autre qui présentent chacune quatre coins (12A, 12B),
b) avec quatre surfaces de liaison en plusieurs parties reliant entre elles les surfaces latérales (9), se composant chacune d'au moins une face de dépouille (14A, 14B) dans la prolongation des bords les plus longs des surfaces latérales (9) et d'une surface frontale (13A, 13B) dans la prolongation, d'une part, d'un des bords les plus courts des surfaces latérales (9) et, d'autre part, des faces de dépouille (14A, 14B) faisant partie de ces mêmes surfaces de liaison,
c) pour laquelle les surfaces de liaison sont disposées par paire inclinées en alternance vers les surfaces latérales (9),
d) pour laquelle des lames principales (15) sont formées par des bords de corps formés par une face de dépouille (14A, 14B) d'une surface de liaison avec la surface frontale (13B, 13A) d'une surface de liaison voisine,
e) pour laquelle les bords courts formés ensemble par les surfaces frontales et latérales (13A et 9 respectivement 13B et 9) des plaques de coupe (3) sont courbés de manière convexe et forment des lames de finition (10A à 10D) et
pour laquelle des faces de dépouille (16) tronconiques sont prévues sur les surfaces frontales (9) des plaques de coupe (3) pour former les courbures convexes des lames de finition (10A à 10D).

2. Plaque de coupe selon la revendication 1, caractérisée en ce que les coins (12A, 12B) des surfaces latérales (9) des plaques de coupe (3) forment un parallélogramme.

3. Plaque de coupe selon la revendication 2, caractérisée en ce que les parallèlogrammes sont des rhomboïdes.

4. Outil pour l'usinage par enlèvement de copeaux de surfaces de pièces à finir par lissage, lequel est rotatif autour d'un axe (sens axial A), avec plusieurs plaques de coupe (3) présentant des lames principales (15) interchangeables et agissant sur sa surface frontale (2) dans la zone de sa périphérie externe, ainsi qu'un dispositif de finissage, la surface latérale (9) de chaque plaque de coupe (3), qui s'écarte de la surface frontale (2) ou de la surface d'enveloppe (22) de l'outil (1, 21), étant inclinée d'un angle de dépouille (γ) par rapport à la surface à usiner de la pièce d'ouvrage (17), caractérisé en ce que les plaques de coupe sont équipées selon l'une des revendications 1 à 3.
